(19) Europäisches Patentamt

European Patent Office

Office européen des brevets

(11) EP 0 450 367 B1

(12) EUROPEAN PATENT SPECIFICATION

(45) Date of publication and mention
of the grant of the patent:
05.01.2000 Bulletin 2000/01

(51) Int Cl.⁷: G10L 5/06, G10L 3/00

(21) Application number: 91104028.5

(22) Date of filing: 15.03.1991

(54) **Speech analysis method and apparatus**

Verfahren und Einrichtung zur Sprachanalyse

Procédé et dispositif pour l'analyse de la parole

(84) Designated Contracting States:
DE FR GB IT NL

(30) Priority: 04.04.1990 US 505085

(43) Date of publication of application:
09.10.1991 Bulletin 1991/41

(73) Proprietor: TEXAS INSTRUMENTS
INCORPORATED
Dallas Texas 75265 (US)

(72) Inventor: Doddington, George R.
Richardson, Texas (US)

(74) Representative: Leiser, Gottfried, Dipl.-Ing. et al
Prinz & Partner GbR
Manzingerweg 7
81241 München (DE)

(56) References cited:
- INTERNATIONAL CONFERENCE ON ACOUSTICS SPEECH AND SIGNAL PROCESSING vol. 1, 7 April 1986, TOKYO JAPAN pages 753 - 756 NAHAMOO 'Clustering acoustic prototypes with self organizing distortion measures'
- MEDITERRANEAN ELECTROTECHNICAL CONFERENCE, MELECON' 89 11 April 1989, LISBON pages 241 - 244 CLASS ET AL 'Speaker adaptation for recognition systems with a large vocabulary'
- INTERNATIONAL CONFERENCE ON ACOUSTICS SPEECH AND SIGNAL PROCESSING vol. 1, 11 April 1988, NEW YORK, USA pages 583 - 586 VELIUS G 'Variants of cepstrum based speaker identity verification'
- INTERNATIONAL CONFERENCE ON ACOUSTICS SPEECH AND SIGNAL PROCESSING vol. 1, 3 April 1990, ALBUQUERQUE NEW MEXICO USA pages 273 - 276 WANG REN-HUA ET AL 'A weighted distance measure based on the fine structure of feature space: application to speaker recognition'
- INTERNATIONAL CONFERENCE ON ACOUSTICS SPEECH AND SIGNAL PROCESSING vol. 1, 7 April 1989, TOKYO JAPAN pages 761 - 764 TOHKURA 'A weighted cepstral distance measure for speech recognition'
- MEDITERRANEAN ELECTROTECHNICAL CONFERENCE MELECON 89 11 April 1989, LISBON PORTUGAL pages 253 - 256 LLEIDA ET AL 'feature selection through orthogonal expansion in isolated word recognition'

EP 0 450 367 B1

**Description**

TECHNICAL FIELD OF THE INVENTION

This invention relates in general to speech technology and more particularly to an improved method and apparatus for speech analysis.

BACKGROUND OF THE INVENTION

The development of good acoustic features for improving the performance of speech analysis has dominated the overall speech analysis effort since the beginning attempts at automatic speech recognition and speaker verification in the 1950's. Through this effort, the short-term amplitude spectrum as a function of time has become the universally accepted measure upon which virtually all successful speech recognizers are currently based. Given this general measure, usually expressed as a spectral amplitude vector sampled uniformly in time, there have been many and various efforts to perform linear and non-linear transformations of the basic measure into forms that yield improved speech analysis performance.

Many current systems employ a linear transformation of the spectral vector which is explicitly designed to yield uncorrelated features. These features are then scaled so that each exhibits equal variance under model conditions. The resultant transformed features are called orthonormal. These orthonormal features, along with a Euclidean distance measure, provide a maximum likelihood recognition answer under typical multivariate Gaussian models. However, even under multivariate Gaussian analysis, these systems still yield a number of errors in speech analysis. These errors most likely result from the inaccuracies of applying a multivariate Gaussian model to the speech measurements.

Therefore, there has arisen a need for a speech analysis method and apparatus which provides a more accurate measurement in performing speech analysis. In document ICASSP 86, Vol. 1, 7. April 1986, Tokyo, D. Nahamoo: "Clustering Acoustic Prototypes with self organized Distortion Measures" a speech analysis method is described. This method is based on a new algorithm for obtaining a set of acoustic prototypes. Associated with each prototype is a distortion measure whose full quadratic distance form is optimized to achieve a local minimum for the average distortion. Using a K-means clustering strategy, it is shown that in each iteration the minimum is achieved when the eigenvectors of the weighting matrices of the quadratic distances or identical to those of the sample covariance matrices of their corresponding clusters. Under certain eigenvalue constraints, closed form solutions for finding the eigenvalues are provided. Furthermore, it is shown that clustering schemes that assume a multivariate Gaussian mixture density for the data can be solved using the new technique. Thereby, a new derivation for the maximum likelihood estimate of their associated covariance matrices is presented.

SUMMARY OF THE INVENTION

In accordance with the present invention, a speech analysis method and apparatus are provided which substantially eliminate or prevent disadvantages and problems associated with prior speech analysis systems.

The present invention includes both apparatus and methodology for improving speech analysis. The speech analysis method of the present invention comprises the features of claim 1.

The present invention provides several technical advantages over prior art devices. The weighted error vector provides improved recognition scoring over prior art speech analysis systems. In particular, a reduction in the number of recognition errors on the order of two has been observed when implementing the weighting feature of the present invention.

The present invention further includes the selective generation of the observation score such that feature elements having relatively high variances are eliminated from consideration. Accordingly, there is the technical advantage that processor time and calculations are minimized. Further, there is the technical advantage that the need for memory otherwise required for additional computations is eliminated. Additionally, the selective elimination yields the technical advantage of a lesser number of errors in the recognition process.

The apparatus for performing speech analysis of the present invention comprises the features of claim 4.

BRIEF DESCRIPTION OF THE DRAWINGS

For a more complete understanding of the present invention, and the advantages thereof, reference is now made to the following description taken in conjunction with the accompanying drawings, in which:

FIGURE 1 illustrates a block diagram of a speech recognizer system;
FIGURE 2 illustrates, in block diagram form, the componentry of the speech feature measuring device illustrated in FIGURE 1; and

FIGURE 3 illustrates a graph depicting the reduced number of speech analysis errors resulting from the weighting feature of the present invention compared to prior art analysis.

## DETAILED DESCRIPTION OF THE INVENTION

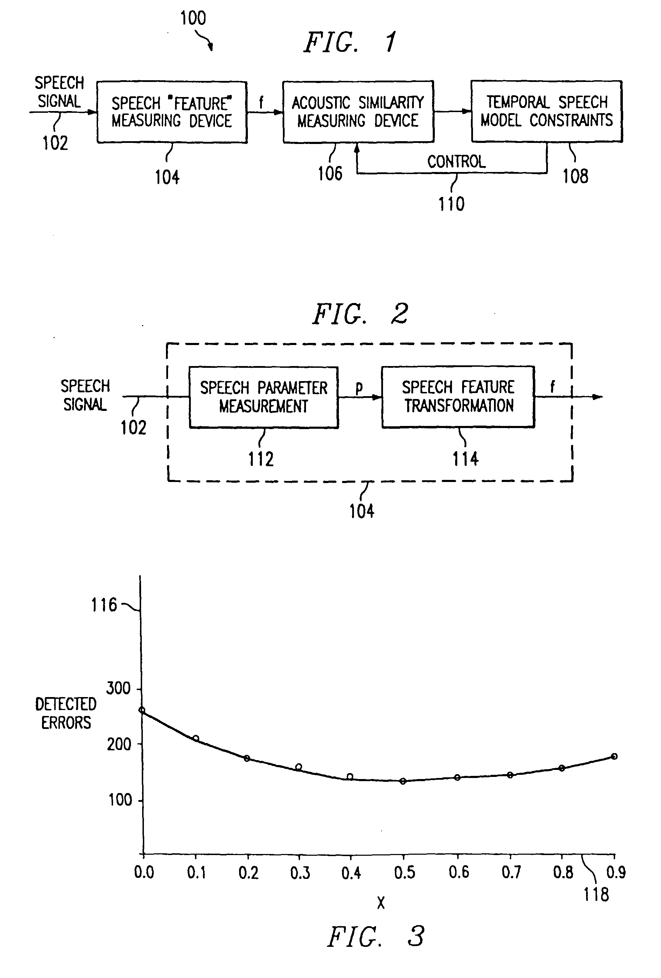

The preferred embodiment of the present invention is best understood by referring to FIGUREs 1-3 of the drawings, like numerals being used for like and corresponding parts of the various drawings.

FIGURE 1 illustrates a speech analysis system designated generally at 100. Speech analysis system 100 may be used in various types of speech analysis. For example, system 100 may be used to perform various speech analysis operations including, but not limited to, speech recognition and speaker verification. Speech analysis system 100 includes an input 102 for receiving a speech signal. Input 102 is connected to a speech "feature" measuring device 104. Speech feature measuring device 104 provides a sequence of feature vectors, f, periodically to an acoustic similarity measuring device 106. Acoustic similarity measuring device 106 interacts with a temporal speech model constraints block 108. In general, the analysis performed by speech analysis system 100 occurs over a period of time. Acoustic similarity measuring device 106 performs statistical analysis on the feature vector for a set of predetermined speech model characterization periods known as "states". Temporal speech model constraints block 108 accounts for the transition between these states by imposing statistical limitations on the transitions between states of the model. Temporal speech model constraints block 108 communicates these limitations to acoustic similarity measuring device 106 by a feedback control line 110. it should be noted that system 100 is applicable to any standard speech recognition/ speaker verification structures. The two most popular are known as DTW (dynamic time warping) and HMM (hidden Markov Model).

Speech analysis system 100 comprises a statistical classification system utilized to analyze speech data. In particular, the overall operation of speech analysis system 100 is as follows. Speech feature measuring device 104 receives a speech signal from its input 102. The speech signal is then measured or calibrated over a given period of time, known as a frame. Typically, the frame is on the order of 10 to 20 milliseconds. The resultant frame measurement is in the form of a vector known as a speech "feature" (hereinafter denoted "f"). The speech feature vector is a vector having anywhere from 2 - 200 numerical elements therein. In the preferred embodiment, the speech feature vector includes 10-20 elements. Each element within the speech feature vector generally reflects the amplitude of the speech signal as a function of frequency (i.e., a spectral amplitude representation). The particular element may reflect either the static amplitude of the speech signal at a predetermined time during the frame or alternatively, may reflect the dynamics of that amplitude, that is, the amplitude difference over a few frame periods. Numerous types of coefficients as known in the art may be used to modify the signal amplitude representations within the speech feature vector. Thus, each speech feature vector may include a number of different amplitude representations for a discrete point in time.

Each speech feature vector, f, is received by acoustic similarity measuring device 106. Acoustic similarity measuring device 106 then compares the speech feature versus a predetermined statistical "reference" model. The comparison is manifested in the form of probability determination that a predetermined state of the statistical model underlies the speech feature vector. This probability determination is known as an "observation score". The observation score is generated for a particular "state" of the model, as discussed in more detail below. In essence, the speech signal received by system 100 is explained with respect to the statistical model that is provided to identify the speech signal. In particular, the statistical process is carried forth in order to determine the most probable and thus the best "path" of the sequence of speech features through the predetermined model of the data. For example, system 100 may provide a speech recognition model to explain utterances of numerical digits (e.g. "one", "two", "three", etc.). Thus, the model will represent in general numerical digits, and will include paths through the model representing likely speech inputs (e.g. path for "one", path for "two", etc.). Each path is further broken down into "states", which are model characterizations of the acoustics over a part of the path (e.g. sound "n" in "one", or sound "t" in "two"). An observation score is generated for each state to determine the probability of the feature vector frame given the particular model reference state.

Temporal speech model constraints block 108 interacts with acoustics similarity measuring device 106 in order to process a series of frames. Thus, temporal speech model constraints block 108 imposes considerations of state transitions as represented by the underlying statistical reference model. Temporal speech model constraints block 108 generates transition probabilities. These transition probabilities reflect the probability that one model state follows another for successive input frames. If the speech signal, when compared against the reference model, results in a state probability above a predetermined threshold, then block 108 provides a control signal via control line 110 to acoustic similarity measuring device 106 to compute the observation score for that state.

For example, consider the above-discussed example of analyzing numerical digits. Further, assume the speech signal received at input 102 is the word, "six". As the utterance of the word "six" is received, speech feature measuring device 104 begins generating speech feature vectors as discussed above. As each feature vector is received, acoustic similarity measuring device 106 compares the feature vector against paths through the reference model in order to generate appropriate probabilities of the feature given each reference model path. As frames are received corresponding to the initial sound "s", acoustic similarity measuring device 106 will yield high probabilities that the speech signal may represent either the model path for "six", or the model path for "seven" due to the initial consonant sound and its corresponding representative speech features. As time and analysis continue, the "i" component of the input signal "six" will be processed. At this instant, temporal speech model constraints 108 will then generate transitional probabilities based on the speech signal versus the reference paths for "six" and "seven". For the former reference, a transition from "s" to "i" will yield a high transition probability. However, the reference model path for "s" to "e" will yield a lesser probability. If this probability is below a predetermined threshold, then temporal speech model constraint block 108 will control acoustic similarity measuring device 106 to stop any further comparison of the path for "seven" to the speech signal.

A more detailed description of the operation of speech analysis system 100 is as follows. However, before proceeding, it should be noted that the various computations and data management discussed herein may be implemented in any one of a multitude of processor/memory systems known in the art.

FIGURE 2 illustrates a block diagram of the components of speech feature measuring device 104 shown in FIGURE 1. Input 102 is connected to a speech parameter measurement block 112. Speech parameter measurement block 112 is connected to speech feature transformation block 114 which provides the feature vector discussed above.

The operation of the components within speech feature measuring device 104 is as follows. Speech parameter measurement block 112 receives the speech signal via input 102. For a predetermined frame of time, typically on the order of 10 to 20 milliseconds, speech parameter measurement block 112 generates a parameter vector, p. In the preferred embodiment, parameter vector p contains 10-40 elements wherein each element typically corresponds to either a static or dynamic acoustic amplitude measurement at a predetermined frequency. Thus the entire parameter vector p represents numerous measurements made on for the speech signal during the frame time period. Parameter vector p is output from speech parameter measurement block 112 to speech feature transformation block 114. The parameter vector, p, is thereafter modeled as a continuous random vector. More particularly, the parameters are assumed to be distributed as a multivariate Guassian distribution. Thus,

$$p \approx N(m_{pr}, C_{pr}) \hspace{4cm} \text{Eqn.1}$$

where,

$m_{pr}$ is the mean value of the parameter vector element,
$C_{pr}$ is the covariance matrix of the parameter vector element, and
r is the model state which generated p.

Speech feature transformation block 114 performs a global transformation on parameter vector, p, under a pooled covariance model. By definition, a pooled covariance model assumes that all model states, r, have the same covariance matrix, $C_{pr}$. Each transformation of a parameter vector, p, results in a corresponding feature vector, f, as defined by

$$f = Tp \hspace{4cm} \text{Eqn. 2}$$

where,

T is the global transformation matrix based on the pooled covariance model.

The global transformation resulting from equation 2 rotates and scales each parameter vector. In particular, the global transformation provides a feature vector with an identity covariance matrix, i.e., having uncorrelated elements and unity variance. As a result, the feature vectors are distributed as multivariate Guassian with mean, $m_f$, and covariance, $C_f$, of one. Thus, the feature vectors may be represented as:

$$f \approx N(m_{fr}, C_{fr}=I) \hspace{4cm} \text{Eqn. 3}$$

where,

$m_{fr}$ is the mean value of the feature vector element,

$C_{fr}$ is the pooled covariance matrix of the feature vector,

r is the model state which generated f, and

I is the identity matrix which is the resultant covariance following the above-noted transformation discussed in connection with Equation 2.

Speech feature transformation block 114 then passes each speech feature vector, f, to acoustic similarity measuring device 106 as illustrated in FIGURE 1.

Upon receipt of a speech feature vector, f, acoustic similarity measuring device 106 will commence analysis of that feature vector with respect to a reference model state. In particular, acoustic similarity measuring device 106 generates the probability (i.e. observation score) that the incoming speech feature vector is explained given a state reference vector, r. Under multivariate Guassian distribution, the probability density function (PDF) may be defined as:

$$PDF = (2\pi)^{-\frac{1}{2}} \left| \det C_{fr} \right|^{-\frac{1}{2}} \exp\left[ -\tfrac{1}{2}(f^T - m_{fr}^T)C_{fr}^{-1}(f - m_{fr}) \right] \qquad \text{Eqn. 4}$$

where,

$C_{fr}$ is the full covariance matrix of the feature vector for the particular state of the reference model,

f is the feature vector, and

$m_{fr}$ is the mean value of f for the state r of the reference model.

For purposes of computational efficiency, the probability density function may be expressed in terms of a log probability. Accordingly, taking the natural logarithm of Equation 4 results in:

$$\log(PDF) = -\tfrac{1}{2}\left( f^T - m_{fr}^T \right)C_{fr}^{-1}(f - m_{fr}) + \log\left[ (2\pi)^{-\frac{1}{2}} \left| \det C_{fr} \right|^{-\frac{1}{2}} \right] \qquad \text{Eqn. 5}$$

where,

- $\tfrac{1}{2}(f^T - m_{fr}^T)C_{fr}^{-1}(f - m_{fr})$ is the quadratic factor of the log probability, and

$\log\left[ (2\pi)^{-\frac{1}{2}} \left| \det C_{fr} \right|^{-\frac{1}{2}} \right]$ is defined as a covariance dispersion factor "$CDF_{fr}$".

The reference covariance matrix, $C_{fr}$, is a positive, definite symmetric matrix. Accordingly, the inverse of the matrix may be transformed as:

$$C_{fr}^{-1} = T_r^T T_r \qquad \text{Eqn. 6}$$

where,

$T_r$ may be further defined as:

$$T_r = S_{fr} U_{fr} \qquad \text{Eqn. 7}$$

where,

$S_{fr}$ is a diagonal matrix of scale factors, wherein each scale factor is the reciprocal of the square root of the eigenvalue of covariance matrix, $C_{fr}$, and

$U_{fr}$ is a unitary matrix containing the eigenvectors for covariance matrix, $C_{fr}$.

Substituting Equation 7 into Equation 5 results in:

$$\log(PDF) = -\tfrac{1}{2}(f-m_{fr})^T U_{fr}{}^T (S_{fr})^T S_{fr} U_{fr}(f-m_{fr}) + CDF_{fr} \qquad \text{Eqn. 8.}$$

The scale factor matrix, $S_{fr}$, is a diagonal matrix and, therefore, the transpose of that matrix is equal to itself. Thus, an error vector, $E_{fr}$ may be defined as:

$$E_{fr} = S_{fr} U_{fr}(f-m_{fr}) \qquad \text{Eqn. 9}$$

Substituting Equation 9 into Equation 8 yields a simplified version of the log probability density function which is:

$$\log(PDF) = -\tfrac{1}{2} E_{fr}{}^T E_{fr} + CDF_{fr} \qquad \text{Eqn. 10}$$

Thus, from Equation 10, it may be appreciated that the log of the probability density function may be represented as a scale factor (i.e., -1/2), times a Euclidean distance represented by the error vector, $E_{fr}$, plus the covariance dispersion factor. The observation score is defined as the logarithm of the probability density function summed over all elements of the feature vector. Thus, the observation score is:

$$\text{observation score} = -\tfrac{1}{2} \sum_{i=1}^{n} E_{fri}^{2} + CDF_{fr} \qquad \text{Eqn. 11}$$

where,

n is the number of elements in the feature vector.

The solution of Equation 11 has heretofore been recognized as representing an accurate method by which to compare speech feature vectors to a reference model. However, under the present invention, it has been discovered that more optimal results may be used by weighting each squared error factor, $E_{fri}{}^2$, prior to the summation as shown in Equation 11. In particular, more accurate results may be obtained wherein each squared error factor is weighted by a function of the state-specific variance (i.e., the eigenvalue) to the pooled covariance variance (i.e. 1). Accordingly, an improved observation score may be determined by:

$$\text{overall } \log(PDF) = -\tfrac{1}{2} \sum_{i=1}^{n} (W_{fri} E_{fri})^{2} + CDF_{fr} \qquad \text{Eqn. 12}$$

where,
**[0024]** $W_{fri}$ is the weighting factor for element i of feature vector f generated for state r, and where $W_{fri}$ is a function of the variance of feature vector element i for state r relative to its pooled variance.
Typically, $W_{fri}$ may be defined as:

$$W_{fri} = S_{fri}{}^{-x} \qquad \text{Eqn. 13}$$

where,

$S_{fri}$ is the ith element of $S_{fr}$ defined in relation to Equation 7, above, and
x is an exponent which in the preferred embodiment is in the range between zero and one as discussed below.

From Equation 12, it may appreciated that each error factor, $E_{fri}{}^2$, may be weighted by a function of the relative variance factor. This factor represents the relative variance of the feature after transformation by the pooled covariance transformation. This is the ratio of the full covariance model variance to the pooled covariance model variance, for each eigenvector.

FIGURE 3 illustrates a graph of the improved results obtained by the present invention. In particular, the graph of FIGURE 3 includes a vertical axis 116 denoting the number of speech analysis errors detected and a horizontal axis 118 denoting the exponent, x, of the weighting factor in accordance with the following equation:

$$\text{observation score} \quad = -\tfrac{1}{2} \sum_{i=1}^{n} (S_{ti} - E_{ti})^2 \cdot E_{ti}^{-x} + CDF_{ti} \quad \text{Eqn. 14}$$

From the graph illustrated in FIGURE 3, it may appreciated that with no weighting factor (i.e., $x = 0$), the total number of errors detected is on the order of 260. This is the result under prior art calculations pursuant to Equation 11. Under the present invention, optimal results are attained where $x = 1/2$. At the point where exponent $x = 1/2$, the graph illustrates that less than 140 errors were detected. As a result, the use of a weighting factor at an exponent of 1/2 results in an error reduction by an approximate factor of two. While a coefficient of 1/2 provides optimal results, FIGURE 3 further illustrates that a coefficient ranging between 0 and 1 results in improved performance over the prior art solution wherein no weighting factor was utilized.

In another aspect of the present invention, it has been discovered that more precise observation scores may be determined by eliminating selected elements otherwise included within the summation of Equation 14. In particular, more accurate observation scores may be generated by eliminating feature elements having relatively high variances (i.e., or eigenvalues) from the summation of Equation 14.

For example, in the preferred embodiment, feature vectors having eighteen elements were utilized to determine observation scores. Thus, in accordance with Equation 14, eighteen products were calculated and summed together. However, it has been empirically determined that elimination of the four feature vector elements having the highest variance with respect to the remaining fourteen feature elements resulted in a more accurate observation score. Thus, only fourteen products corresponding to the fourteen feature vector elements having relatively lower variances were summed. The resultant observation score produced significantly fewer errors than compared with a full summation over all feature vector elements. It should be further noted that the removal of these elements requires fewer calculations and less memory.

Although the present invention has been described in detail, it should be understood that various changes, substitutions and alterations can be made herein without departing from the scope of the invention as defined by the appended claims. In particular, while the discussion herein has been with particular reference to speech recognition, the same principles may be applied by one skilled in the art to speaker verification in order to achieve similar improved results.

**Claims**

1. A method of speech analysis, comprising:

   receiving a feature vector having a plurality of feature elements;
   providing a reference model vector having a plurality of reference mean elements, an associated eigenvector matrix and an associated eigenvalue matrix;
   generating selected elements of an error vector corresponding to selected feature vector elements, wherein the error vector is defined as the product of the selected elements of the reference model eigenvector matrix, corresponding selected elements of a square root of the reference model eigenvalue matrix and corresponding selected elements of the difference between the feature vector and the reference model vector;
   generating the square of selected elements of the error vector;
   weighting each of the square of selected elements of the error vector by a weight factor, wherein the weight factor comprises the eigenvalue of the reference model eigenvalue matrix corresponding to the selected element and raised to a predetermined exponent of one-half; and
   summing the weighted selected elements such that an observation score is generated.

2. The method of Claim 1 wherein said step of generating selected elements of an error vector comprises generating a number of elements equal to the number of elements in the feature vector.

3. The method of Claim 1 wherein said step of generating selected elements of an error vector comprises:

EP 0 450 367 B1

determining the variance of each of the feature elements; and
generating selected elements based on the variance of the feature elements wherein only elements corresponding to feature elements having relatively low variances are generated.

**4.** An apparatus for performing speech analysis, comprising:

circuitry for receiving a feature vector having elements;
circuitry for providing a reference model vector having a mean, an eigenvector matrix and an eigenvalue matrix;
circuitry for generating selected elements of an error vector corresponding to the feature vector elements, wherein the error vector is defined as the product of the selected elements of the reference model eigenvector matrix, corresponding selected elements of a square root of the reference model eigenvalue matrix and corresponding selected elements of the difference between the feature vector and the reference model vector mean;
circuitry for generating the square of selected elements of the error vector;
circuitry for weighting each of the square of selected elements of the error vector by a weight factor, wherein the weight factor comprises the eigenvalue of the reference model eigenvalue matrix corresponding to the selected element and raised to a predetermined exponent of one-half; and
circuitry for summing the weighted selected elements such that an observation score is generated.

**5.** The apparatus of Claim 4 wherein said circuitry for generating selected elements of an error vector comprises circuitry for generating a number of elements equal to the number of elements in the feature vector.

**6.** The apparatus of Claim 4 wherein said circuitry for generating selected elements of an error vector comprises:

circuitry for determining the variance of each of the feature elements; and
circuitry for generating selected elements based on the variance of the feature elements wherein only elements corresponding to feature elements having relatively low variances are generated.

**Patentansprüche**

**1.** Verfahren zur Sprachanalyse, bei dem

ein Merkmalsvektor mit mehreren Merkmalselementen empfangen wird;
ein Referenzmodellvektor mit mehreren Referenzmittelwerten, eine zugehörige Eigenvektormatrix und eine zugehörige Eigenwertmatrix geliefert werden;
ausgewählte Elemente eines Fehlervektors in Entsprechung zu ausgewählten Merkmalsvektorelementen erzeugt werden, wobei der Fehlervektor definiert ist als das Produkt aus den ausgewählten Elementen der Referenzmodelleigenvektormatrix, entsprechenden ausgewählten Elementen einer Wurzel aus der Referenzmodelleigenwertmatrix und entsprechenden ausgewählten Elementen der Differenz zwischen dem Merkmalsvektor und dem Referenzmodellvektor;
das Quadrat ausgewählter Elemente des Fehlervektors gebildet wird;
jedes der Quadrate ausgewählter Elemente des Fehlervektors mit einem Gewichtungsfaktor gewichtet wird, wobei der Gewichtungsfaktor den zu dem ausgewählten Element gehörenden Eigenwert der Referenzmodelleigenwertmatrix umfaßt, der mit einem vorherbestimmten Exponenten 1/2 versehen ist; und
die gewichteten ausgewählten Elemente so aufsummiert werden, daß eine Beobachtungsbewertung erzeugt wird.

**2.** Verfahren nach Anspruch 1, bei dem bei dem Schritt des Erzeugens ausgewählter Elemente eines Fehlervektors eine Anzahl an Elementen erzeugt wird, die der Anzahl der Elemente des Merkmalsvektors entspricht.

**3.** Verfahren nach Anspruch 1, bei dem bei dem Schritt des Erzeugens ausgewählter Elemente eines Fehlervektors

die Varianz jedes Merkmalselements bestimmt wird; und
ausgewählte Elemente basierend auf der Varianz der Merkmalselemente erzeugt werden, wobei nur Elemente erzeugt werden, die Merkmalselementen entsprechen, deren Varianzen relativ klein sind.

**4.** Vorrichtung zur Durchführung einer Sprachanalyse mit

einer Schaltungsanordnung zum Empfangen eines Merkmalsvektors mit Elementen;

einer Schaltungsanordnung zum Liefern eines einen Mittelwert aufweisenden Referenzmodellvektors, einer Eigenvektormatrix und einer Eigenwertmatrix;

einer Schaltungsanordnung zum Erzeugen ausgewählter Elemente eines Fehlervektors in Entsprechung zu den Merkmalsvektorelementen, wobei der Fehlervektor definiert ist als das Produkt aus den ausgewählten Elementen der Referenzmodelleigenvektormatrix, entsprechenden ausgewählten Elementen einer Wurzel aus der Referenzmodelleigenwertmatrix und entsprechenden ausgewählten Elementen der Differenz zwischen dem Merkmalsvektor und dem Referenzmodellvektormittel;

einer Schaltungsanordnung zum Bilden des Quadrats ausgewählter Elemente des Fehlervektors;

einer Schaltungsanordnung zum Gewichten jedes der Quadrate ausgewählter Elemente des Fehlervektors mit einem Gewichtungsfaktor, wobei der Gewichtungsfaktor den zu dem ausgewählten Element gehörenden Eigenwert der Referenzmodelleigenwertmatrix umfaßt, der mit einem vorherbestimmten Exponenten 1/2 versehen ist; und

einer Schaltungsanordnung zum Aufsummieren der gewichteten ausgewählten Elemente, um eine Beobachtungsbewertung zu erzeugen.

**5.** Vorrichtung nach Anspruch 4, bei der die Schaltungsanordnung zum Erzeugen ausgewählter Elemente eines Fehlervektors eine Schaltungsanordnung zum Erzeugen einer Anzahl an Elementen umfaßt, die der Anzahl der Elemente des Merkmalsvektors entspricht.

**6.** Vorrichtung nach Anspruch 4, bei der die Schaltungsanordnung zum Erzeugen ausgewählter Elemente eines Fehlervektors

eine Schaltungsanordnung zum Bestimmen der Varianz jedes Merkmalselements; und

eine Schaltungsanordnung zum Erzeugen ausgewählter Elemente basierend auf der Varianz der Merkmalselemente umfaßt, wobei nur Elemente erzeugt werden, die Merkmalselementen entsprechen, deren Varianzen relativ klein sind.

**Revendications**

**1.** Procédé d'analyse de la parole comportant les étapes de :

- recevoir un vecteur de caractéristique ayant une pluralité d'éléments de caractéristique ;
- fournir un vecteur de modèle de référence ayant une pluralité d'éléments moyens de référence, une matrice de vecteur propre associée et une matrice de valeur propre associée ;
- générer des éléments sélectionnés d'un vecteur d'erreur correspondant à des éléments de vecteur de caractéristique sélectionnés, le vecteur d'erreur étant défini comme étant le produit des éléments sélectionnés de la matrice de vecteur propre du modèle de référence, des éléments sélectionnés correspondants d'une racine carrée de la matrice de valeur propre de modèle de référence et d'éléments sélectionnés correspondants de la différence entre le vecteur de caractéristique et le vecteur de modèle de référence ;
- générer le carré d'éléments sélectionnés du vecteur d'erreur ;
- pondérer chacun des carrés des éléments sélectionnés du vecteur d'erreur par un facteur de pondération, le facteur de pondération comprenant la valeur propre de la matrice de valeur propre du modèle de référence correspondant à l'élément sélectionné, et élevée à un exposant prédéterminé d'un demi; et
- faire la somme des éléments sélectionnés pondérés de telle façon qu'une marque d'observation soit engendrée.

**2.** Procédé suivant la revendication 1, dans lequel ladite étape de génération d'éléments sélectionnés d'un vecteur d'erreur, comprend la génération d'un nombre d'éléments égal au nombre d'éléments dans le vecteur de caractéristique.

**3.** Procédé suivant la revendication 1, dans lequel ladite étape de génération d'éléments sélectionnés d'un vecteur d'erreur comprend les étapes de :

- déterminer la variance de chacun des éléments de caractéristique ; et
- générer des éléments sélectionnés basés sur la variance des éléments de caractéristique, seulement des éléments correspondant à des éléments de caractéristique ayant des variances relativement faibles étant générés.

4. Appareil pour assurer l'analyse de la parole, comprenant:

- un circuit pour recevoir un vecteur de caractérlstique ayant des éléments ;
- un circuit pour fournir un vecteur de modèle de référence ayant une moyenne, une matrice de vecteur propre et une matrice de valeur propre ;
- un circuit pour générer des éléments sélectionnés d'un vecteur d'erreur correspondant aux éléments de vecteur de caractéristique, le vecteur d'erreur étant défini comme le produit des éléments sélectionnés de la matrice de vecteur propre de modèle de référence, d'éléments sélectionnés correspondants d'une racine carrée de la matrice de valeur propre du modèle de référence, et d'éléments sélectionnés correspondants de la différence entre le vecteur de caractéristique et la moyenne du vecteur de modèle de référence ;
- un circuit pour engendrer le carré d'éléments sélectionnés du vecteur d'erreur ;
- un circuit pour pondérer chacun des carrés d'éléments sélectionnés du vecteur d'erreurs par un facteur de pondération, le facteur de pondération comprenant la valeur propre de la matrice de valeur propre du modèle de référence correspondant à l'élément sélectionné et élevée à un exposant prédéterminé d'un demi ; et
- un circuit de sommation des éléments sélectionnés pondérés de manière qu'une marque d'observation soit générée.

5. Appareil suivant la revendication 4, dans lequel ledit circuit pour générer des éléments sélectionnés d'un vecteur d'erreur comprend un circuit pour engendrer un certain nombre d'éléments égal au nombre d'éléments du vecteur de caractéristique.

6. Appareil suivant la revendication 4, dans lequel ledit circuit pour générer des éléments sélectionnés d'un vecteur d'erreur comprend :

- un circuit pour déterminer la variance de chacun desdits éléments de caractéristique ; et
- un circuit pour générer des éléments sélectionnés basés sur la variance des éléments de caractéristique, seuls les éléments correspondant à des éléments de caractéristique ayant des variances relativement faibles étant générés.

100

*FIG. 1*

SPEECH
SIGNAL → SPEECH "FEATURE" MEASURING DEVICE → f → ACOUSTIC SIMILARITY MEASURING DEVICE → TEMPORAL SPEECH MODEL CONSTRAINTS

102

104     106    CONTROL    108

110

*FIG. 2*

SPEECH
SIGNAL → SPEECH PARAMETER MEASUREMENT → p → SPEECH FEATURE TRANSFORMATION → f →

102     112       114

104

116

DETECTED ERRORS

300

200

100

X

0.0  0.1  0.2  0.3  0.4  0.5  0.6  0.7  0.8  0.9

118

*FIG. 3*